# EUROPEAN PATENT SPECIFICATION

(11) **EP 1 422 353 B1**
(45) Date of publication and mention of the grant of the patent: **23.07.2008**
(21) Application number: 03257356.0
(22) Date of filing: 21.11.2003
(51) Int. Cl.: E03F 5/02, E03B 7/07, G01F 15/18

(54) **Boundary box and method**
Inspektionsschacht und Verfahren
Chambre d'inspection et procédé

(30) Priority: 22.11.2002 GB 0227334
(43) Date of publication of application: 26.05.2004
(73) Proprietor: Atlantic Plastics Limited, Mid Glamorgan CF31 2AX (GB)
(72) Inventor: Graham, Stephen John, Chelmsford Essex CM3 4XN (GB)
(74) Representative: Flint, Adam

(56) References cited:
- EP-A- 0 210 933
- GB-A- 2 194 576
- GB-A- 2 241 010
- GB-A- 2 310 683
- US-A- 5 303 583
- US-A- 6 029 684

## Description

The present invention relates to a boundary box and to a method of removing a valve from a boundary box.

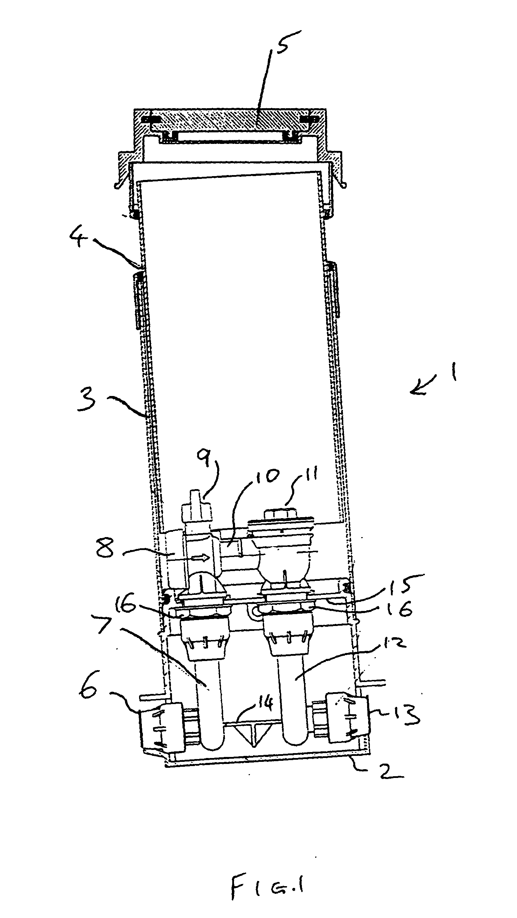

A boundary box provides the connection point between the mains water supply and a property to be supplied with water. Referring to Figure 1 of the drawings, there is shown a prior art boundary box 1. The boundary box 1 is positioned in a pit which is dug outside the property to be supplied with water. The boundary box 1 has a base 2 which is placed at the bottom of the pit. A tubular outer guard tube 3 of circular cross-section is open at its lower and upper ends. The lower end fits into the base 2. The example shown in Figure 1 has a telescopic inner sleeve 4 which fits inside the outer guard tube 3 to allow the overall height of the boundary box 1 to be adjusted. The example shown in Figure 1 has a tiltable lid 5 which allows the upper surface of the lid 5 to be positioned to be flush with the ground. A water inlet connection 6 at the bottom of the boundary box 1 provides a connection point to the mains water supply. Water entering the inlet connection point 6 passes through an inlet tube 7 to a stop valve 8 which can be operated by a key 9 which is accessible through the top of the boundary box 1 in order to allow the water supply through the boundary box 1 to be shut off as and when required. Water flowing through the stop valve 8 passes through a manifold 10 which has a connection point 11 to which equipment such as a water meter, filter, water sampler, etc. may optionally be fitted. Water then flows, optionally via a non-return valve (not shown), through an outlet pipe 12 which passes through an outlet connection point 13 to the property to be supplied with water. In this prior art arrangement, the inlet and outlet tubes 7,12 are retained rigidly by a mounting bracket 14 in the base 2. Similarly, the stop valve 8 and manifold 10 are securely fixed to a mounting bracket 15 provided in the base 2 of the boundary box 1 by nuts 16 which are tightened up against the under surface of the mounting bracket 15. With this prior art arrangement, if it is necessary to remove and replace any of the inlet and outlet connection points 6,13, inlet and outlet tubes 7,12, or the stop valve 8, manifold 10 and non-return valve, then because of the secure fixing of these components, it is necessary to excavate and remove the whole of the boundary box 1 from the pit in which it is installed. This is plainly a time-consuming and disruptive process, particularly as it is often necessary to turn off the supply of water to the property concerned and also to surrounding properties during the excavation process.

GB-A-2310683 discloses an example of a boundary box of the general type discussed above. GB-A-2194576 discloses a base unit for an underground stopcock housing having a tunnel through which a stopcock extends. US-A-5303583 discloses another example of a boundary box.

According to a first aspect of the present invention, there is provided a boundary box for installation in a pit to allow water to be supplied to a property, the boundary box comprising: a guard tube, the guard tube containing one or more valves that control the flow of water from a water supply through the boundary box to a property to be supplied with water, the guard tube having an opening to allow access to said one or more valves; and, a water inlet tube for conveying water from a mains water supply into the boundary box; said one or more valves being mounted in the guard tube by a fitting that allows said one or more valves to be secured in the guard tube and removed from the guard tube by a manual operation through the opening in the guard tube without requiring the boundary box to be removed from a said pit; characterised by: a check valve at the upper end of the water inlet tube for preventing flow of water therethrough when the or one of the removable valves is removed from the boundary box.

With such a boundary box, if for any reason it is necessary to remove the one or more valves, this can be achieved by simple access to the valves and manual operation of the valve or fitting as required. The time-consuming and disruptive process of excavating the boundary box as in the prior art is entirely avoided.

Preferably, the fitting for said one or more valves is arranged to be operable by rotation of said one or more valves to selectively secure said one or more valves in the guard tube and release said one or more valves from the guard tube.

The fitting conveniently comprises a bayonet connection between said one or more valves and the guard tube. Alternatively or additionally, a screw fitting or the like may be used.

The boundary box may comprise plural said valves each of which is independently mounted in the guard tube by a respective fitting that allows each valve to be secured in and removed independently from the guard tube by a manual operation through the opening in the guard tube without requiring the boundary box to be removed from a said pit.

In an embodiment, the boundary box comprises a water outlet tube for conveying water from the boundary box to a property, the water outlet tube having a check valve for preventing flow of water therethrough when the or one of the removable valves is removed from the boundary box.

According to a second aspect of the present invention, there is provided a method of replacing a valve in a boundary box installed in a pit, the boundary box comprising a guard tube and a water inlet tube for conveying water from a mains water supply into the boundary box, the guard tube containing one or more valves that control the flow of water from a water supply through the boundary box to a property to be supplied with water, the guard tube having an opening to allow access to said one or more valves, said one or more valves being mounted in the guard tube by a fitting, the boundary box having a check valve at the upper end of the water inlet tube for preventing flow of water therethrough when the or one of the removable valves is removed from the boundary box the method comprising: removing a valve from the guard tube by a manual operation of the fitting through the opening in the guard tube without removing the boundary box from the pit; and securing a replacement valve in the guard tube by a manual operation of the fitting through the opening in the guard tube without removing the boundary box from the pit; the check valve preventing flow of water through the inlet tube during the removing and securing steps.

The method preferably comprises operating the fitting by rotating said valve.

The fitting conveniently comprises a bayonet connection between said valve and the guard tube.

An embodiment of the present invention will now be described by way of example with reference to the accompanying drawings, in which:
Fig. 1 is a longitudinal cross-sectional view of a prior art boundary box; and,
Fig. 2 is a longitudinal cross-sectional view of a first example of a boundary box in accordance with an embodiment of the present invention; and,
Fig. 3 is a longitudinal cross-sectional view of a second example of a boundary box in accordance with an embodiment of the present invention.

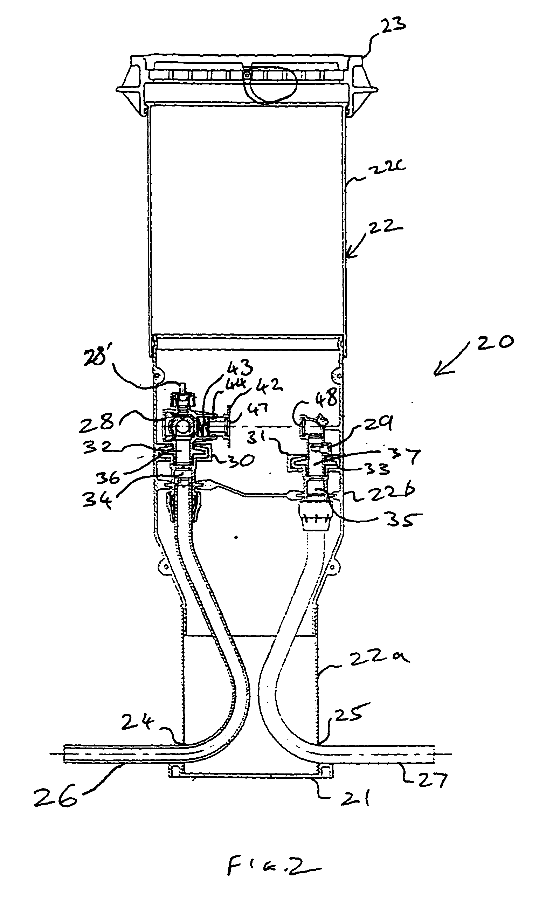

Referring to Figure 2, a boundary box 20 has a base 21 on which a guard tube 22 is supported. In this example, the guard tube 22 is formed of three tubular portions 22a,22b,22c arranged in series from the base 21 to the upper end of the boundary box 20. The lowermost portion 22a is of circular cross-section and the uppermost portion 22c is of oval cross-section, the middle portion 22b providing a transition between the circular and oval cross-sections. The uppermost portion 22c is slidably mounted on the middle portion 22b to provide for telescopic adjustment of the overall height of the boundary box 20. A detachable lid 23 sealingly closes the open upper end of the guard tube 22.

The lowermost portion 22a of the guard tube 22 has openings 24,25 on opposed sides for a water inlet tube 26 and a water outlet tube 27 respectively.

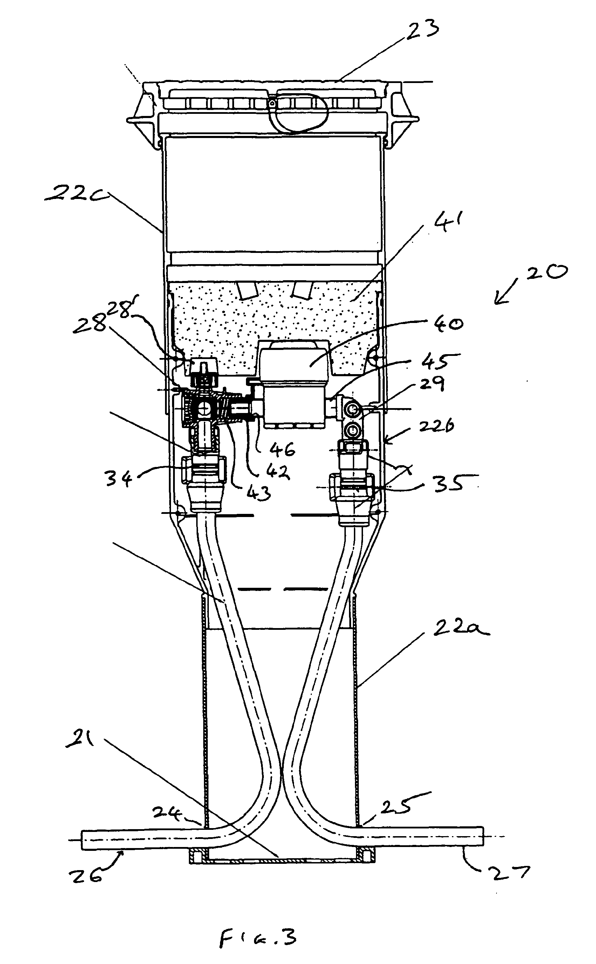

The middle portion 22b of the guard tube 22 has fittings that support the parts of the boundary box 20 that are most likely to have to be replaced in practice. Such parts are typically a stop valve 28 on the water supply side of the boundary box and a non-return valve 29 on the property side of the boundary box 20. It will be understood that these are the main pressure-bearing components of the boundary box 20. The stop valve 28 is manually operable by rotation of a key 28' on the top of the stop valve 28, access being had through the upper end of the boundary box 20. A water meter (not shown in Figure 2 but visible in Figure 3) is in practice fitted between the stop valve 28 and the non-return valve 29.

The fitting for the removable parts is such that the stop and non-return valves 28,29 can be removed from the guard tube 20 by a manual operation through the open upper end of the guard tube 22, the lid 23 being temporarily removed for this purpose. This arrangement avoids the need to excavate and remove the whole of the boundary box 20 from the pit in which it is installed.

In the embodiment shown in Figure 2, the fitting for the stop and non-return valves 28,29 is in each case a bayonet-type fitting. In particular, channels 30,31 are integrally formed on the inner surface of the middle portion 22b of the guard tube 22. Each of the outer walls of the housings of the stop and non-return valves 28,29 has two outwardly projecting opposed lugs 32,33. By rotation of the housing of the valve 28,29, the lugs 32,33 can be introduced through upwardly facing openings (not visible in Figure 2) into the respective channel 30,31. The housing of the valve 28,29 is then rotated to engage the lugs 32,33 in the channel 30,31 to secure the valve 28,29 in position in the boundary box 20. In this position, the valves 28,29 sealingly engage with the inlet and outlet tubes 24,25 respectively so that water can flow through the boundary box 20 as required. Removal of the valves 28,29 is achieved simply by carrying out the steps described above in reverse.

Any other arrangement for fixing the stop and/or the non-return valve 28,29 in the boundary box 20, such that the valve 28,29 can be removed by a manual operation through the open upper end of the boundary box 20, can be used instead of the bayonet-type fitting described above. For example, a screw threaded arrangement could be provided.

In the preferred embodiment, a respective check valve 34,35 is provided at the upper end of each of the water inlet and outlet tubes 26,27 in the region of the bayonet housing channels 30,31, i.e. upstream of the stop valve 28 and downstream of the non-return valve 29 respectively. A respective spigot 36,37 at the lower end of each of the stop valve 28 and non-return valve 29 projects downwardly. These spigots 36,37 open the respective check valves 34,35 when the stop valve 28 and non-return valve 29 are fitted into the bayonet housing channels 30,31, thereby allowing water to flow through the boundary box 20. Conversely, when the stop valve 28 or the non-return valve 29 is removed, withdrawal of the spigot 36,37 allows the corresponding check valve 34,35 to close, thereby preventing water entering the boundary box 20 from the mains water supply and/or from the property.

Figure 3 shows a second example of a boundary box 20 in accordance with an embodiment of the present invention. This example is very similar to the first example, and the same reference numerals have been used to indicate the same or corresponding parts. The main difference in this example is that the bayonet housing channels 30,31 and correspondingly the lugs 32,33 of the valves 28,29 are positioned 90° around a vertical axis compared to the example of Figure 2 such that the lugs 32,33 and the channels 30,31 are not visible in Figure 3. Figure 3 however shows a water meter 40 fitted between the stop valve 28 and the non-return valve 29, the fitting for the meter 40 being the same in the first and second examples of the boundary box 20. A non-absorbent foam insulation pack 41 is also shown in Figure 3 fitted over the water meter 40 and valves 28,29.

With reference to both Figures 2 and 3, fitting and removal of the water meter 40 will now be discussed. At the water exit point of the housing of the stop valve 28, a spring-loaded piston 42 projects towards the housing of the non-return valve 29. The piston 42 is hollow and biased outwardly, towards the non-return valve 29, by a coil compression spring 43. One or more O-ring seals 44 may be provided around the piston 42 to seal the piston 42 in the mouth of the housing of the stop valve 28. In order to fit a water meter 40, the piston 42 is pushed against the loading of the spring 43 (i.e. pushed to the left in the drawings), optionally by using a special tool which can be inserted through the open upper end of the boundary box 20. The water meter 40 is then offered up to the housings of the stop and non-return valves 28,29. The exit tube 45 of the water meter is then fitted into the corresponding inlet of the housing of the non-return valve 29. Similarly, the inlet tube 46 of the water meter 40 is inserted into the hollow interior of the piston 42. Again, O-rings 47,48 may be provided in the facing end of the piston 42 and the inlet tube of the housing of the non-return valve 29 in order to seal the connections with the water meter 40. Once the water meter 40 is in place, the piston 42 is released. The spring-loaded piston 42 takes up any slack or tolerance and thus ensures a good, watertight connection between the water meter 40 and the other water-carrying components of the boundary box 20. The spring-loaded piston 42 also enables quick removal and therefore replacement of the water meter 40, it being understood that removal of the water meter 40 is carried out by carrying out the above steps in reverse. The stop valve 28 is operated to prevent and enable water to flow from the mains water supply into the boundary box as necessary during fitting and removal of the water meter 40.

Embodiments of the present invention have been described with particular reference to the example illustrated. However, it will be appreciated that variations and modifications may be made to the examples described within the scope of the present claims.

## Claims

1. A boundary box (20) for installation in a pit to allow water to be supplied to a property, the boundary box (20) comprising:
a guard tube (22), the guard tube (22) containing one or more valves (28,29) that control the flow of water from a water supply through the boundary box (20) to a property to be supplied with water, the guard tube (22) having an opening to allow access to said one or more valves (28,29); and,
a water inlet tube (26) for conveying water from a mains water supply into the boundary box (20);
said one or more valves (28,29) being mounted in the guard tube (22) by a fitting (30,31,32,33) that allows said one or more valves (28,29) to be secured in the guard tube (22) and removed from the guard tube (22) by a manual operation through the opening in the guard tube (22) without requiring the boundary box (20) to be removed from said pit; **characterised by**:
a check valve (34) at the upper end of the water inlet tube (26) for preventing flow of water therethrough when the or one of the removable valves (28,29) is removed from the boundary box (20).

2. A boundary box (20) according to claim 1, wherein the fitting (30,31,32,33) for said one or more valves (28,29) is arranged to be operable by rotation of said one or more valves (28,29) to selectively secure said one or more valves (28,29) in the guard tube (22) and release said one or more valves (28,29) from the guard tube (22).

3. A boundary box (20) according to claim 2, wherein the fitting (30,31,32,33) comprises a bayonet connection (30,31,32,33) between said one or more valves (28,29) and the guard tube (22).

4. A boundary box (20) according to any of claims 1 to 3, comprising plural said valves (28,29) each of which is independently mounted in the guard tube (22) by a respective fitting (30,31,32,33) that allows each said valve (28,29) to be secured in and removed independently from the guard tube (22) by a manual operation through the opening in the guard tube (22) without requiring the boundary box (20) to be removed from a said pit.

5. A boundary box (20) according to any of claims 1 to 4, comprising a water outlet tube (27) for conveying water from the boundary box (20) to a property, the water outlet tube (27) having a check valve (35) for preventing flow of water therethrough when the or one of the removable valves (28,29) is removed from the boundary box (20).

6. A method of replacing a valve (28,29) in a boundary box (20) installed in a pit, the boundary box (20) comprising a guard tube (22) and a water inlet tube (26) for conveying water from a mains water supply into the boundary box (20), the guard tube (22) containing one or more valves (28,29) that control the flow of water from a water supply through the boundary box (20) to a property to be supplied with water, the guard tube (22) having an opening to allow access to said one or more valves (28,29), said one or more valves (28,29) being mounted in the guard tube (22) by a fitting (30,31,32,33), the boundary box (20) having a check valve (34) at the upper end of the water inlet tube (26) for preventing flow of water therethrough when the or one of the removable valves (28,29) is removed from the boundary box (20) the method comprising:
removing a valve (28,29) from the guard tube (22) by a manual operation of the fitting (30,31,32,33) through the opening in the guard tube (22) without removing the boundary box (20) from the pit; and
securing a replacement valve (28,29) in the guard tube (22) by a manual operation of the fitting (30,31,32,33) through the opening in the guard tube (22) without removing the boundary box (20) from the pit;
the check valve (34) preventing flow of water through the inlet tube (26) during the removing and securing steps.

7. A method according to claim 6, comprising:
operating the fitting (30,31,32,33) by rotating said valve (28,29).

8. A method according to claim 7, wherein the fitting (30,31,32,33) comprises a bayonet connection (30,31,32,33) between said valve (28,29) and the guard tube (22).

## Patentansprüche

1. Inspektionsschacht (20) zur Installation in einer Grube, um die Zufuhr von Wasser an eine Immobilie (einen Grundbesitz) zu ermöglichen, wobei der Inspektionsschacht (20) umfasst:
ein Schutzrohr (22), wobei das Schutzrohr (22) eines oder mehrere Ventile (28, 29) enthält, das bzw. die den Wasserfluss von einer Wasserversorgung durch den Inspektionsschacht (20) an eine mit Wasser zu versorgende Immobilie steuert bzw. steuern, wobei das Schutzrohr (22) eine Öffnung hat, um einen Zugriff auf das Ventil oder die Ventile (28, 29) zu ermöglichen; und
ein Wassereinlassrohr (26) zum Leiten von Wasser von einem Wasserversorgungsnetz in den Inspektionsschacht (20);
wobei das Ventil oder die Ventile (28, 29) in dem Schutzrohr (22) durch ein Anschlussstück (30, 31, 32, 33) befestigt sind, welches ermöglicht, dass das Ventil oder die Ventile (28, 29) durch eine manuelle Betätigung über die Öffnung in dem Schutzrohr (22) in dem Schutzrohr (22) gesichert und aus dem Schutzrohr (22) entfernt wird bzw. werden, ohne dass der Inspektionsschacht (20) aus der Grube entfernt werden muss, **gekennzeichnet durch:**
ein Rückschlagventil (34) an dem oberen Ende des Wassereinlassrohrs (26) zum Verhindern, dass Wasser **durch** dieses hindurchfließt, wenn das oder eines der entfernbaren Ventile (28, 29) aus dem Inspektionsschacht entfernt wird.

2. Inspektionsschacht (20) nach Anspruch 1, wobei das Anschlussstück (30, 31, 32, 33) für das Ventil oder die Ventile (28, 29) so angeordnet ist, dass es durch Drehen des Ventils oder der Ventile (28, 29) betätigt werden kann, um das Ventil oder die Ventile (28, 29) in dem Schutzrohr (22) selektiv zu sichern und das Ventil oder die Ventile (28, 29) von dem Schutzrohr (22) zu lösen.

3. Inspektionsschacht (20) nach Anspruch 2, wobei das Anschlussstück (30, 31, 32, 33) eine Bajonettverbindung (30, 31, 32, 33) zwischen dem Ventil oder den Ventilen (28, 29) und dem Schutzrohr (22) umfasst.

4. Inspektionsschacht (20) nach einem der Ansprüche 1 bis 3, umfassend eine Mehrzahl der Ventile (28, 29), die jeweils einzeln in dem Schutzrohr (22) über ein entsprechendes Anschlussstück (30, 31, 32, 33) befestigt sind, welches es ermöglicht, dass jedes Ventil (28, 29) durch eine manuelle Betätigung über die Öffnung in dem Schutzrohr (22) einzeln in dem Schutzrohr (22) gesichert und aus dem Schutzrohr (22) entfernt werden kann, ohne dass der Inspektionsschacht (20) aus der Grube genommen werden muss.

5. Inspektionsschacht (20) nach einem der Ansprüche 1 bis 4, umfassend ein Wasserauslassrohr (27) zum Leiten von Wasser aus dem Inspektionsschacht (20) an eine Immobilie, wobei das Wasserauslassrohr (27) ein Rückschlagventil (35) aufweist, um einen Wasserfluss durch dieses zu verhindern, wenn das oder die entfernbaren Ventile (28, 29) aus dem Inspektionsschacht (20) entfernt wird bzw. werden.

6. Verfahren zum Ersetzen eines Ventils (28, 29) in einem Inspektionsschacht (20), welcher in einer Grube installiert ist, wobei der Inspektionsschacht (20) ein Schutzrohr (22) und ein Wassereinlassrohr (26) aufweist, um Wasser aus einem Wasserversorgungsnetz in den Inspektionsschacht (20) zu leiten, wobei das Schutzrohr (22) ein Ventil oder mehrere Ventile (28, 29) aufweist, die den Wasserfluss von einer Wasserversorgung durch den Inspektionsschacht (20) an eine mit Wasser zu versorgende Immobilie steuert bzw. steuern, wobei das Schutzrohr (22) eine Öffnung aufweist, um einen Zugang zu dem Ventil oder den Ventilen (28, 29) zu ermöglichen, wobei das Ventil oder die Ventile (28, 29) in dem Schutzrohr (22) über ein Anschlussstück (30, 31, 32, 33) befestigt sind, wobei der Inspektionsschacht (20) ein Rückschlagventil (34) an dem oberen Ende des Wassereinlassrohrs (26) hat, um zu verhindern, dass Wasser durch dieses hindurch fließt, wenn das oder eines der entfernbaren Ventile (28, 29) aus dem Inspektionsschacht (20) entfernt wird, wobei das Verfahren aufweist:
Entfernen eines Ventils (28, 29) aus dem Schutzrohr (22) durch manuelle Betätigung des Anschlussstücks (30, 31, 32, 33) über die Öffnung in dem Schutzrohr (22), ohne den Inspektionsschacht (20) aus der Grube zu entfernen; und
Sichern eines Ersatzventils (28, 29 ) in dem Schutzrohr (22) durch manuelle Betätigung des Anschlussstücks (30, 31, 32, 33) über die Öffnung in dem Schutzrohr (22), ohne den Inspektionsschacht (20) aus der Grube zu entfernen;
wobei das Rückschlagventil (34) verhindert, dass während der Schritte des Entfernens und Sicherns Wasser durch das Einlassrohr (26) fließt.

7. Verfahren nach Anspruch 6, umfassend:
Betätigen des Anschlussstücks (30, 31, 32, 33) durch Drehen des Ventils (28, 29).

8. Verfahren nach Anspruch 7, wobei das Anschlussstück (30, 31, 32, 33) eine Bajonettverbindung (30, 31, 32, 33) zwischen dem Ventil (28, 29) und dem Schutzrohr (22) umfasst.

## Revendications

1. Coffret de limite (20) destiné à être installé dans une fosse pour permettre à de l'eau d'être distribuée à une propriété, le coffret de limite (20) comprenant :
un tube de protection (22), le tube de protection (22) contenant une ou plusieurs vannes (28, 29) qui contrôlent l'écoulement d'eau à partir d'une alimentation en eau à travers le coffret de limite (20) jusqu'à une propriété destinée à être alimentée en eau, le tube de protection (22) possédant une ouverture pour permettre l'accès à ladite une ou plusieurs vannes (28, 29) ; et
un tube d'entrée d'eau (26) pour transporter de l'eau à partir d'une alimentation en eau de canalisation dans le coffret de limite (20) ;
ladite une ou plusieurs vannes (28, 29) étant montées dans le tube de protection (22) par un raccord (30, 31, 32, 33) qui permet à ladite ou une ou plusieurs vannes (28, 29) d'être fixées dans le tube de protection (22) et retirées du tube de protection (22) par l'intermédiaire d'une opération manuelle à travers l'ouverture dans le tube de protection (22) sans nécessiter que le coffret de limite (20) soit retiré de ladite fosse ; **caractérisé par** :
un clapet de non-retour (34) au niveau de l'extrémité supérieure du tube d'entrée d'eau (26) pour empêcher l'écoulement d'eau à travers celui-ci lorsque la ou une parmi les vannes amovibles (28, 29) est retirée du coffret de limite (20).

2. Coffret de limite (20) selon la revendication 1, dans lequel le raccord (30, 31, 32, 33) pour ladite une ou plusieurs vannes (28, 29) est agencé pour être actionnable par rotation de ladite une ou plusieurs vannes (28, 29) pour fixer de façon sélective ladite une ou plusieurs vannes (28, 29) dans le tube de protection (22) et libérer ladite une ou plusieurs vannes (28, 29) à partir du tube de protection (22).

3. Coffret de limite (20) selon la revendication 2, dans lequel le raccord (30, 31, 32, 33) comprend un raccord à baïonnette (30, 31, 32, 33) entre ladite une ou plusieurs vannes (28, 29) et le tube de protection (22).

4. Coffret de limite (20) selon l'une quelconque des revendications 1 à 3, comprenant plusieurs dites vannes (28, 29) dont chacune est montée indépendamment dans le tube de protection (22) par un raccord respectif (30, 31, 32, 33) qui permet à chaque dite vanne (28, 29) d'être fixée dans et retirée indépendamment du tube de protection (22) par l'intermédiaire d'une opération manuelle à travers l'ouverture dans le tube de protection (22) sans nécessiter que le coffret de limite (20) soit retiré de ladite fosse.

5. Coffret de limite (20) selon l'une quelconque des revendications 1 à 4, comprenant un tube de sortie d'eau (27) pour transporter de l'eau à partir du coffret de limite (20) jusqu'à une propriété, le tube de sortie d'eau (27) possédant un clapet de non-retour (35) pour empêcher l'écoulement d'eau à travers celui-ci lorsque la ou une parmi les vannes amovibles (28, 29) est retirée du coffret de limite (20).

6. Procédé de remplacement d'une vanne (28, 29) dans un coffret de limite (20) installé dans une fosse, le coffret de limite (20) comprenant un tube de protection (22) et un tube d'entrée d'eau (26) pour transporter de l'eau à partir d'une alimentation en eau de canalisation dans le coffret de limite (20), le tube de protection (22) contenant une ou plusieurs vannes (28, 29) qui contrôlent l'écoulement d'eau à partir d'une alimentation en eau à travers le coffret de limite (20) jusqu'à une propriété destinée à être alimentée en eau, le tube de protection (22) possédant une ouverture pour permettre l'accès à ladite une ou plusieurs vannes (28, 29), ladite une ou plusieurs vannes (28, 29) étant montées dans le tube de protection (22) par un raccord (30, 31, 32, 33), le coffret de limite (20) possédant un clapet de non-retour (34) au niveau de l'extrémité supérieure du tube d'entrée d'eau (26) pour empêcher l'écoulement d'eau à travers celui-ci lorsque la ou une parmi les vannes amovibles (28, 29) est retirée du coffret de limite (20), le procédé comprenant les étapes consistant à :
retirer une vanne (28, 29) à partir du tube de protection (22) par l'intermédiaire d'une opération manuelle du raccord (30, 31, 32, 33) à travers l'ouverture dans le tube de protection (22) sans retirer le coffret de limite (20) de la fosse ; et
fixer une vanne de remplacement (28, 29) dans le tube de protection (22) par l'intermédiaire d'une opération manuelle du raccord (30, 31, 32, 33) à travers l'ouverture dans le tube de protection (22) sans retirer le coffret de limite (20) de la fosse ;
le clapet de non-retour (34) empêchant l'écoulement d'eau à travers le tube d'entrée (26) au cours des étapes consistant à retirer et à fixer.

7. Procédé selon la revendication 6, comprenant l'étape consistant à actionner le raccord (30, 31, 32, 33) en faisant tourner ladite vanne (28, 29).

8. Procédé selon la revendication 7, dans lequel le raccord (30, 31, 32, 33) comprend un raccord à baïonnette (30, 31, 32, 33) entre ladite vanne (28, 29) et le tube de protection (22).
